# FASCICULE DE BREVET EUROPEEN

(11) **EP 3 359 417 B1**
(45) Date de publication et mention de la délivrance du brevet: **11.09.2019**
(21) Numéro de dépôt: 16784239.2
(22) Date de dépôt: 29.09.2016
(51) Int. Cl.: B60N 2/80, B60N 2/879, B60N 2/58, B60R 11/00, B60R 11/02, B60N 2/60

(54) **APPUI-TÊTE DE SIÈGE DE VÉHICULE AUTOMOBILE**
KOPFSTÜTZE FÜR MOTORFAHRZEUGSITZE
MOTOR VEHICLE SEAT HEADREST

(30) Priorité: 09.10.2015 FR 1559636
(43) Date de publication de la demande: 15.08.2018
(73) Titulaire: TESCA France, 75008 Paris (FR)
(72) Inventeur: BIEVEN, Franck, 75002 Paris (FR); GANIER, David, 02190 Guignicourt (FR)
(74) Mandataire: Sayettat, Julien Christian
(86) Numéro de dépôt international: PCT/FR2016/052488
(87) Numéro de publication internationale: WO 2017/060589

(56) Documents cités:
- US-A1- 2014 270 322
- US-A1- 2015 201 260

## Description

L'invention concerne un appui-tête de siège de véhicule automobile.

Il est connu de réaliser un appui-tête de siège de véhicule automobile, ledit appui-tête comprenant :
- une armature de montage sur un dossier dudit siège,
- une structure de montage d'un haut-parleur, ladite structure étant associée en partie supérieure de ladite armature,
- ledit haut-parleur associé à ladite structure,
- un bloc de matériau de rembourrage élastiquement compressible recouvrant ladite structure, ledit bloc étant pourvu d'un conduit destiné à permettre la propagation du son émis par ledit haut-parleur, ledit conduit débouchant d'une part vers ledit haut-parleur et d'autre part vers l'extérieur,
- une coiffe de revêtement chaussée sur ledit bloc, ladite coiffe étant pourvue d'un orifice disposé en regard dudit conduit,
- une grille de recouvrement dudit orifice, ladite grille comprenant un surplomb périphérique de recouvrement d'une bande périphérique de ladite coiffe s'étendant en périphérie dudit orifice, une épaisseur dudit matériau de rembourrage s'étendant à l'aplomb de ladite bande.

Du fait que la coiffe soit chaussée sur le bloc de rembourrage, il n'y a pas d'adhésion entre les deux.

Il en résulte que l'orifice est susceptible de se déformer par rapport à sa configuration nominale, notamment lorsqu'un doigt d'enfant est introduit entre le surplomb et la bande périphérique, ce qui peut conduire à une situation où le bloc peut apparaître autour de la grille, avec le désagrément esthétique qui en résulte. Le document US 2015/201260 divulgue une appui-tête de siège de véhicule automobile avec une armature de montage sur un dossier dudit siège, une structure de montage d'un haut-parleur, ladite structure étant associée en partie supérieure de ladite armature et une haut-parleur associé à ladite structure.

Il est connu de l'art antérieur de prévoir une absence de matériau de rembourrage à l'aplomb de la bande périphérique, la structure de montage venant en contact avec ladite bande, ce qui permet de fixer ladite bande à ladite structure et d'éviter ainsi toute déformation de l'orifice par rapport à sa configuration nominale.

Cependant, dans le cas où une épaisseur du matériau de rembourrage s'étend à l'aplomb de la bande périphérique, un tel agencement ne peut être mis en oeuvre.

L'invention a pour but de proposer un agencement permettant de garantir un blocage de l'orifice dans sa configuration nominale dans une telle situation.

A cet effet, l'invention propose un appui-tête de siège de véhicule automobile, ledit appui-tête comprenant :
- une armature de montage sur un dossier dudit siège,
- une structure de montage d'un haut-parleur, ladite structure étant associée en partie supérieure de ladite armature,
- ledit haut-parleur associé à ladite structure,
- un bloc de matériau de rembourrage élastiquement compressible recouvrant ladite structure, ledit bloc étant pourvu d'un conduit destiné à permettre la propagation du son émis par ledit haut-parleur, ledit conduit débouchant d'une part vers ledit haut-parleur et d'autre part vers l'extérieur,
- une coiffe de revêtement chaussée sur ledit bloc, ladite coiffe étant pourvue d'un orifice disposé en regard dudit conduit,
- une grille de recouvrement dudit orifice, ladite grille comprenant un surplomb périphérique de recouvrement d'une bande périphérique de ladite coiffe s'étendant en périphérie dudit orifice, une épaisseur dudit matériau de rembourrage s'étendant à l'aplomb de ladite bande,
ledit appui-tête comprenant en outre une rondelle de rigidification de ladite bande, ladite rondelle présentant une périphérie interne de géométrie analogue à celle dudit orifice, ledit surplomb s'étendant en regard de ladite rondelle.

Lorsqu'il est dit qu'une épaisseur du matériau de rembourrage s'étend à l'aplomb de la bande, on signifie qu'une couche dudit matériau s'étend en regard de la face d'envers de ladite bande.

Avec l'agencement proposé, l'orifice est bloqué dans sa configuration nominale par la rondelle de rigidification, ce qui permet d'éviter tout risque d'apparition du bloc de rembourrage autour de la grille.

D'autres particularités et avantages de l'invention apparaîtront dans la description qui suit, faite en référence aux figures jointes, dans lesquelles :
- la figure 1 est une vue schématique en perspective partielle éclatée d'un appui-tête selon une réalisation,
- la figure 2 est une vue schématique partielle en coupe de l'appui-tête de la figure 1 assemblé,
- la figure 3 est un agrandissement de détail de la figure 2,
- la figure 4 est un agrandissement de détail de la figure 3,
- les figures 5a et 5b sont des variantes de réalisation de l'agencement présenté en figure 4.

En référence aux figures, on décrit un appui-tête 1 de siège de véhicule automobile, ledit appui-tête comprenant :
- une armature de montage - notamment à base de tube métallique replié en forme générale de U renversé - sur un dossier dudit siège,
- une structure de montage 2 - notamment en matériau plastique moulé - d'un haut-parleur 3, ladite structure étant associée en partie supérieure de ladite armature,
- ledit haut-parleur associé à ladite structure,
- un bloc 4 de matériau de rembourrage élastiquement compressible - ledit bloc étant notamment à base de matériau moulé et étant notamment une mousse de polyuréthanne flexible - recouvrant ladite structure, ledit bloc étant pourvu d'un conduit 5 destiné à permettre la propagation du son émis par ledit haut-parleur, ledit conduit débouchant d'une part vers ledit haut-parleur et d'autre part vers l'extérieur,
- une coiffe 6 de revêtement - notamment à base de textile ou de cuir - chaussée sur ledit bloc, ladite coiffe étant pourvue d'un orifice 7 disposé en regard dudit conduit,
- une grille 8 de recouvrement dudit orifice, ladite grille comprenant un surplomb 9 périphérique de recouvrement d'une bande 10 périphérique de ladite coiffe s'étendant en périphérie dudit orifice, une épaisseur 11
dudit matériau de rembourrage s'étendant à l'aplomb de ladite bande, ledit appui-tête comprenant en outre une rondelle de rigidification 12 de ladite bande, ladite rondelle présentant une périphérie interne de géométrie analogue à celle dudit orifice, ledit surplomb s'étendant en regard de ladite rondelle.

Selon la réalisation représentée, la rondelle 12 est associée en face d'envers de la bande 10 de sorte que ladite bande s'insère entre le surplomb 9 et ladite rondelle.

Selon une réalisation, la rondelle 12 présente une dureté supérieure ou égale à 50 shore.

Selon la réalisation représentée, la rondelle 12 est associée à la bande 10 par couture 13 ou, en variante non représentée, par soudure.

Selon une réalisation, la rondelle 12 est à base de matériau plastique moulé ou de carton.

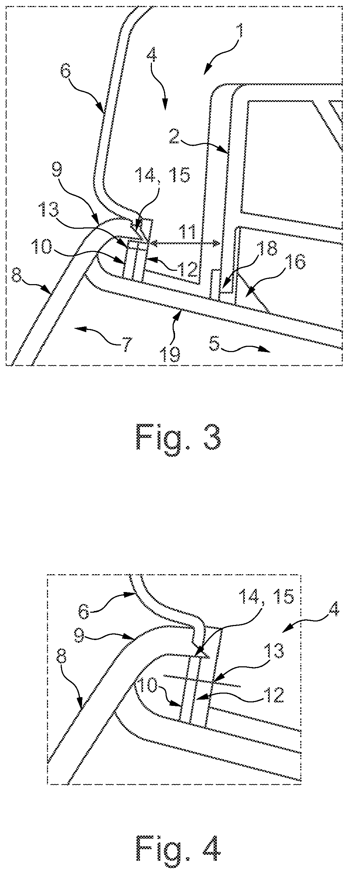

Selon les réalisations représentées en figures 3 à 5, la rondelle 12 comprend une pluralité de trous 14, le surplomb 9 étant pourvu d'une pluralité d'ergots 15 s'introduisant dans lesdits trous de manière à bloquer le positionnement relatif entre la grille 8 et l'orifice 7.

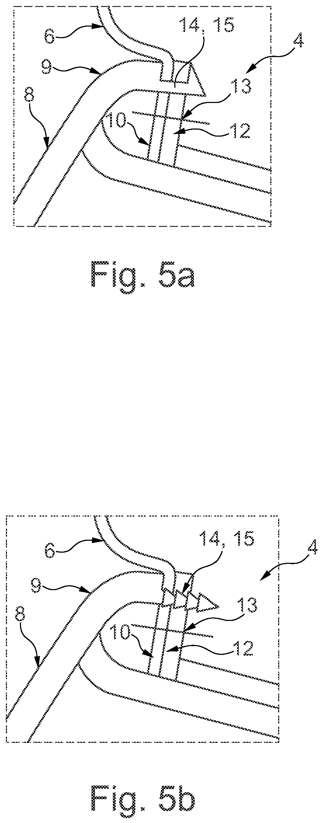

Selon la réalisation représentée en figures 5a et 5b, les ergots 15 sont conformés en harpon de manière à empêcher leur retrait une fois positionnés dans les trous 14.

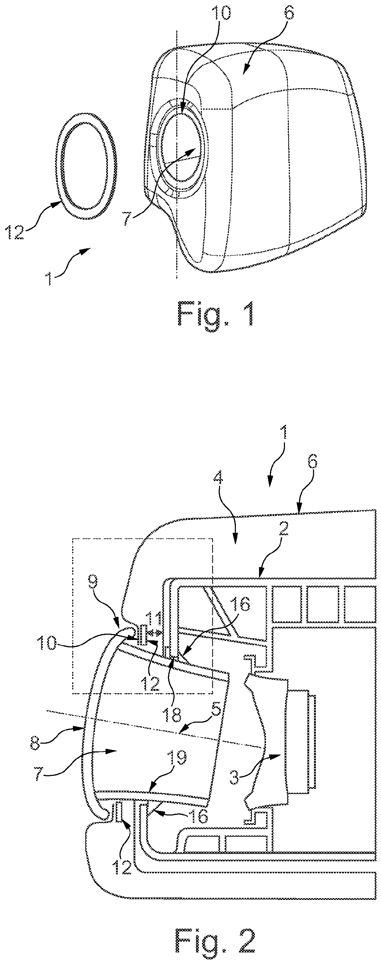

Selon la réalisation représentée en figure 2 et 3, la grille 8 se prolonge par une partie tubulaire 19 de propagation du son garnissant le conduit 5.

Selon la réalisation représentée en figures 2 et 3, la grille est pourvue de moyens de fixation 16 à la structure de montage 2.

Selon la réalisation représentée en figure 2 et 3, les moyens de fixation sont sous formes de harpons - ici issus de la partie 19 - s'ancrant sur des butées 18 prévues sur la structure de montage 2.

## Revendications

1. Appui-tête (1) de siège de véhicule automobile, ledit appui-tête comprenant :
• une armature de montage sur un dossier dudit siège,
• une structure de montage (2) d'un haut-parleur (3), ladite structure étant associée en partie supérieure de ladite armature,
• ledit haut-parleur associé à ladite structure,
• un bloc (4) de matériau de rembourrage élastiquement compressible recouvrant ladite structure, ledit bloc étant pourvu d'un conduit (5) destiné à permettre la propagation du son émis par ledit haut-parleur, ledit conduit débouchant d'une part vers ledit haut-parleur et d'autre part vers l'extérieur,
• une coiffe (6) de revêtement chaussée sur ledit bloc, ladite coiffe étant pourvue d'un orifice (7) disposé en regard dudit conduit,
• une grille (8) de recouvrement dudit orifice, ladite grille comprenant un surplomb périphérique (9) de recouvrement d'une bande périphérique (10) de ladite coiffe s'étendant en périphérie dudit orifice, une épaisseur (11) dudit matériau de rembourrage s'étendant à l'aplomb de ladite bande,
ledit appui-tête comprenant en outre une rondelle (12) de rigidification de ladite bande, ladite rondelle présentant une périphérie interne de géométrie analogue à celle dudit orifice, ledit surplomb s'étendant en regard de ladite rondelle.

2. Appui-tête selon la revendication 1, **caractérisé en ce que** la rondelle (12) est associée en face d'envers de la bande (10) de sorte que ladite bande s'insère entre le surplomb (9) et ladite rondelle.

3. Appui-tête selon l'une des revendications 1 ou 2, **caractérisé en ce que** la rondelle (12) présente une dureté supérieure ou égale à 50 shore.

4. Appui-tête selon l'une quelconque des revendications 1 à 3, **caractérisé en ce que** la rondelle (12) est associée à la bande (10) par couture (13) ou soudure.

5. Appui-tête selon l'une quelconque des revendications 1 à 4, **caractérisé en ce que** la rondelle (12) est à base de matériau plastique moulé ou de carton.

6. Appui-tête selon l'une quelconque des revendications 1 à 5, **caractérisé en ce que** la rondelle (12) comprend une pluralité de trous (14), le surplomb (9) étant pourvu d'une pluralité d'ergots (15) s'introduisant dans lesdits trous de manière à bloquer le positionnement relatif entre la grille (8) et l'orifice (7).

7. Appui-tête selon la revendication 6, **caractérisé en ce que** les ergots (15) sont conformés en harpon de manière à empêcher leur retrait une fois positionnés dans les trous (14).

8. Appui-tête selon l'une quelconque des revendications 1 à 7, **caractérisé en ce que** la grille (8) se prolonge par une partie tubulaire (19) de propagation du son garnissant le conduit (5).

9. Appui-tête selon l'une quelconque des revendications 1 à 8, **caractérisé en ce que** la grille (8) est pourvue de moyens de fixation (16) à la structure de montage (2).

10. Appui-tête selon la revendication 9, **caractérisé en ce que** les moyens de fixation (16) sont sous formes de harpons s'ancrant sur des butées (18) prévues sur la structure de montage (2).

## Patentansprüche

1. Kopfstütze (1) für Kraftfahrzeugsitz, wobei die Kopfstütze umfasst:
- eine Montagearmierung auf einer Rückenlehne des Sitzes,
- eine Montagestruktur (2) eines Lautsprechers (3), wobei die Struktur im oberen Teil der Armierung zugeordnet ist,
- den Lautsprecher, welcher der Struktur zugeordnet ist,
- einen Block (4) aus elastisch komprimierbaren Polstermaterials, die Struktur bedeckend, wobei der Block mit einer Leitung (5) versehen ist, die dazu bestimmt ist, die Weiterleitung des von dem Lautsprecher gesendeten Tons zu erlauben, wobei die Leitung zum einen zum Lautsprecher und zum anderen nach außen ausmündet,
- eine Verkleidungshaube (6), die auf den Block gestülpt ist, wobei die Haube mit einer Öffnung (7) versehen ist, die gegenüber der Leitung angeordnet ist,
- ein Abdeckgitter (8) der Öffnung, wobei das Gitter einen peripheren Abdecküberhang (9) eines peripheren Streifens (10) der Haube umfasst, der sich an der Peripherie der Öffnung erstreckt, wobei sich eine Stärke (11) des Polstermaterials senkrecht zu dem Streifen erstreckt,
wobei die Kopfstütze ferner eine Versteifungsscheibe (12) des Streifens umfasst, wobei die Scheibe eine innere Peripherie mit einer Geometrie aufweist, die zu der der Öffnung analog ist, wobei sich der Überhang der Scheibe zugewandt erstreckt.

2. Kopfstütze nach Anspruch 1, **dadurch gekennzeichnet, dass** die Scheibe (12) dem Streifen (10) rückseitig derart zugeordnet ist, dass sich der Streifen zwischen den Überhang (9) und die Scheibe einfügt.

3. Kopfstütze nach einem der Ansprüche 1 oder 2, **dadurch gekennzeichnet, dass** die Scheibe (12) eine Härte von über oder gleich 50 Shore aufweist.

4. Kopfstütze nach einem der Ansprüche 1 bis 3, **dadurch gekennzeichnet, dass** die Scheibe (12) dem Streifen (10) durch Nähen (13) oder Schweißen zugeordnet ist.

5. Kopfstütze nach einem der Ansprüche 1 bis 4, **dadurch gekennzeichnet, dass** die Scheibe (12) auf der Basis von geformtem Kunststoffmaterial oder von Karton ist.

6. Kopfstütze nach einem der Ansprüche 1 bis 5, **dadurch gekennzeichnet, dass** die Scheibe (12) eine Vielzahl von Löchern (14) umfasst, wobei der Überhang (9) mit einer Vielzahl von Spornen (15) versehen ist, die sich in die Löcher derart einfügen, dass die relative Positionierung zwischen dem Gitter (8) und der Öffnung (7) blockiert wird.

7. Kopfstütze nach Anspruch 6, **dadurch gekennzeichnet, dass** die Sporne (15) derart harpunenförmig ausgebildet sind, dass ihr Herausziehen, nachdem sie in den Löchern (14) positioniert wurden, verhindert wird.

8. Kopfstütze nach einem der Ansprüche 1 bis 7, **dadurch gekennzeichnet, dass** das Gitter (8) durch einen rohrförmigen Tonweiterleitungsteil (19) verlängert wird, welcher die Leitung (5) umgibt.

9. Kopfstütze nach einem der Ansprüche 1 bis 8, **dadurch gekennzeichnet, dass** das Gitter (8) mit Befestigungsmitteln (16) auf der Montagestruktur (2) versehen ist.

10. Kopfstütze nach Anspruch 9, **dadurch gekennzeichnet, dass** die Befestigungsmittel (16) die Form von Harpunen haben, die sich auf Anschlägen (18) verankern, die auf der Montagestruktur (2) vorgesehen sind.

## Claims

1. Motor vehicle seat headrest (1), said headrest comprising:
- a mounting frame on a backrest of said seat,
- a mounting structure (2) for a loudspeaker (3), said structure being associated in the upper portion of said frame,
- said loudspeaker associated with said structure,
- a block (4) of elastically compressible padding material covering said structure, said block being provided with a conduit (5) intended to allow the sound emitted by said loudspeaker to propagate, said conduit opening on the one hand towards said loudspeaker and on the other hand outwards,
- a covering cover (6) fitted over said block, said cover being provided with an orifice (7) positioned facing said conduit,
- a grating (8) for covering said orifice, said grating comprising a peripheral overhang (9) covering a peripheral strip (10) of said cover extending at the periphery of said orifice, a thickness (11) of said padding material extending in alignment with said strip,
said headrest further comprising a washer (12) for stiffening said strip, said washer having an internal periphery of geometry analogous to that of said orifice, said overhang extending facing said washer.

2. Headrest according to claim 1, **characterised in that** the washer (12) is associated at the rear side of the strip (10) in such a way that said strip is inserted between the overhang (9) and said washer.

3. Headrest according to one of claims 1 or 2, **characterised in that** the washer (12) has a hardness greater than or equal to 50 shore.

4. Headrest according to any of claims 1 to 3, **characterised in that** the washer (12) is associated with the strip (10) by sewing (13) or welding.

5. Headrest according to any of claims 1 to 4, **characterised in that** the washer (12) is made from a moulded plastic material or from cardboard.

6. Headrest according to any of claims 1 to 5, **characterised in that** the washer (12) comprises a plurality of holes (14), the overhang (9) being provided with a plurality of lugs (15) being introduced in said holes in such a way as to block the relative positioning between the grating (8) and the orifice (7).

7. Headrest according to claim 6, **characterised in that** the lugs (15) are harpoon shaped so as to prevent them from being removed once positioned in the holes (14).

8. Headrest according to any of claims 1 to 7, **characterised in that** the grating (8) is extended by a tubular portion (19) for propagating the sound lining the conduit (5).

9. Headrest according to any of claims 1 to 8, **characterised in that** the grating (8) is provided with means for fastening (16) to the mounting structure (2).

10. Headrest according to claim 9, **characterised in that** the means for fastening (16) have the form of harpoons that are anchored on stops (18) provided on the mounting structure (2).
